# EUROPEAN PATENT APPLICATION

(11) **EP 1 978 318 A2**
(43) Date of publication of application: **08.10.2008**
(21) Application number: 08005915.7
(22) Date of filing: 27.03.2008
(51) Int. Cl.: F25D 21/14

(54) **Apparatus including freezing unit and projector including freezing unit**

(30) Priority: 29.03.2007 JP 2007088290
(71) Applicant: Sanyo Electric Co., Ltd., Moriguchi-shi, Osaka (JP)
(72) Inventor: Tsuchiya, Masaki, Ota-shi, Gunma, 373-0816 (JP)
(74) Representative: Glawe, Ulrich

(57) **Abstract**

There are disclosed an apparatus including a freezing unit (10) capable of securely discharging drainage from an evaporator (18) regardless of a posture change of a main body, and a projector (P) including the freezing unit (10). A liquid crystal display projector (P) (an apparatus) including a main body (1) provided with a freezing unit (10) having a refrigerant circuit constituted of at least a compressor (12), a radiator (14), a capillary tube (16) (a pressure reducing unit) and an evaporator (18) includes a tapered shape of a sealed path of a duct which surrounds the evaporator constituted in the whole region under the evaporator in a prospective posture change of the main body, a groove (70) (a liquid receiving portion) formed in the center of the shape, and a wick (75) (a discharge member) which discharges drainage received in this groove (70) by use of a capillary force.

## Description

### BACKGROUND OF THE INVENTION

The present invention relates to an apparatus in which a main body includes a freezing unit having a refrigerant circuit constituted of a compressor, a radiator, a pressure reducing unit, an evaporator and the like, and it also relates to a projector including the freezing unit.

Heretofore, a freezing unit having a refrigerant circuit constituted of a compressor, a radiator, a pressure reducing unit, an evaporator and the like is mounted on various apparatus such as a refrigerator, a freezer and an air conditioner. In the freezing unit, when the compressor is driven, a refrigerant is sucked into a compression space and compressed therein to form a high-temperature high-pressure refrigerant gas which flows into the radiator. The refrigerant which has flowed into the radiator performs heat exchange between the refrigerant and surrounding air to radiate heat. Afterward, a pressure of the refrigerant is reduced in the pressure reducing unit, and the refrigerant reaches the evaporator.

Then, the refrigerant absorbs heat from the surrounding air to evaporate in the evaporator, and is then sucked into the compressor again, and this cycle is repeated. Moreover, in the evaporator, the heat exchange between the evaporator and the refrigerant is performed, whereby a water content included in the air is condensed on the surface of the evaporator, and drops down as water droplets. To solve the problem, a tray is installed in a lower part of the evaporator so that drainage (condensed water) from the evaporator can be received in this tray. Then, the drainage which has dropped down to the tray is then discharged from the freezing unit via a pipe connected to a bottom part of the tray (e.g., Japanese Patent Application Laid-Open No. 2001-99558).

In addition, the applicant has previously developed a projector including this freezing unit mounted thereon so that an optical element of the projector is cooled in the cold air through the evaporator. The optical element of the projector is cooled in the freezing unit in this manner, whereby a temperature of the optical element can be held at a suitable temperature. Moreover, various effects such as reducing of amount of air flows, improvement of an energy efficiency and reducing of an installation space can be obtained.

On the other hand, such a projector is provided so that the main body is rotatable around a burner axis (an optical axis) of a light source lamp, and hence the freezing unit needs to be provided in accordance with this constitution. In this case, the drainage from the evaporator drops down to any place owing to the rotation of the projector. Therefore, when the tray is only installed in the lower part of the evaporator as in the conventional example, with all prospective postures of the main body, the drainage from the evaporator cannot be received and discharged from the projector.

### SUMMARY OF THE INVENTION

The present invention has been developed in order to solve a conventional technical problem, and an object thereof is to provide an apparatus including a freezing unit capable of securely discharging drainage from an evaporator regardless of a posture change of a main body, and a projector including the freezing unit.

An apparatus including a freezing unit according to a first aspect of the invention is an apparatus in which a main body is provided with the freezing unit having a refrigerant circuit constituted of at least a compressor, a radiator, a pressure reducing unit and an evaporator, characterized by comprising: a liquid receiving portion constituted in the whole region under the evaporator in a prospective posture change of the main body; and a discharge member which discharges drainage received in this liquid receiving portion by use of a capillary force or a permeation force.

An apparatus including the freezing unit according to a second aspect of the invention is characterized in that in the first aspect of the invention, the discharge member discharges, to the radiator, the drainage received in the liquid receiving portion.

A projector including a freezing unit according to a third aspect of the invention which is the apparatus according to the above inventions, characterized by comprising a main body including a light source, an optical element which processes light emitted from this light source in accordance with image information, a projection lens which projects a projected image of the processed light onto a screen, and a duct in which an evaporator is incorporated and which supplies, to the optical element, air subjected to heat exchange between the air and the evaporator, wherein the liquid receiving portion is constituted in an inner surface of the duct.

According to the first aspect of the invention, the apparatus in which the main body is provided with the freezing unit having the refrigerant circuit constituted of at least the compressor, the radiator, the pressure reducing unit and the evaporator comprises the liquid receiving portion constituted in the whole region under the evaporator in the prospective posture change of the main body, and the discharge member which discharges the drainage received in this liquid receiving portion by use of the capillary force or the permeation force. Therefore, even when the posture of the main body changes, the drainage from the evaporator can be received by the liquid receiving portion, and can be described from the apparatus by the discharge member.

In particular, as in the second aspect of the invention, the discharge member discharges, to the radiator, the drainage received in the liquid receiving portion, so that the drainage can be evaporated by radiant heat of the radiator.

Furthermore, as in the third aspect of the invention, the projector is the apparatus according to the first or second aspect of the invention, the main body of the projector includes the light source, the optical element which processes the light emitted from this light source in accordance with the image information, the projection lens which projects the projection image of the processed light onto the screen, and the duct in which the evaporator is incorporated and which supplies, to the optical element, the air subjected to the heat exchange between the air and the evaporator, and the liquid receiving portion is constituted in the duct inner surface. In consequence, even when the freezing unit is mounted on the projector, the drainage from the evaporator can be discharged from a duct, and hence a disadvantage that the drainage flows through the optical element can be avoided in advance.

### BRIEF DESCRIPTION OF THE DRAWINGS

FIG. 1 is a perspective view showing a schematic constitution of a liquid crystal display projector as one embodiment of an apparatus including a freezing unit to which the present invention is applied;
FIG. 2 is an arrangement diagram viewed from a front surface of the freezing unit of the liquid crystal display projector shown in FIG. 1;
FIG. 3 is an arrangement diagram viewed from one side surface of the freezing unit of the liquid crystal display projector shown in FIG. 1;
FIG. 4 is an arrangement diagram viewed from a plane of the freezing unit of the liquid crystal display projector shown in FIG. 1;
FIG. 5 is a diagram showing a duct of the liquid crystal display projector shown in FIG. 1, and flow of air flowing through the duct; and
FIG. 6 is a diagram showing the freezing unit in a case where a main body of the projector shown in FIG. 1 rotates.

### DETAILED DESCRIPTION OF THE PREFERRED EMBODIMENT

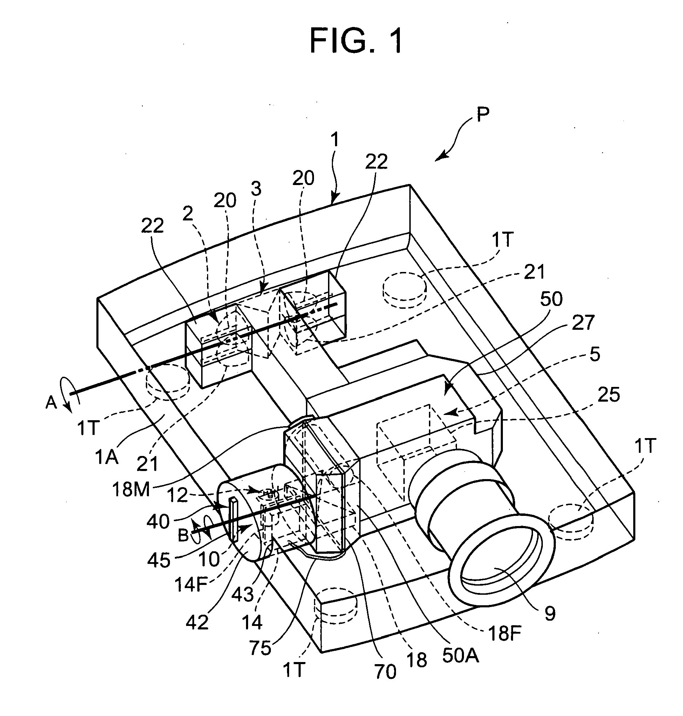

An embodiment of the present invention will hereinafter be described in detail with reference to the drawings. FIG. 1 is a schematic perspective view showing a projector as one embodiment of an apparatus including a freezing unit according to the present invention. The projector according to the present embodiment is a liquid crystal display projector P constituted by providing, in a main body 1, a light source 2, an optical path changing member 3, a uniform illumination optical system (not shown), a color separation optical system (not shown), an optical element 5, a projection lens 9 and a freezing unit 10 of the optical element 5. The main body 1 is a flat housing constituted of a material having an excellent heat release property, for example, magnesium. It is to be noted that for the sake of description of each unit provided in the main body 1, the main body 1 is shown in a flat section in which an upper part of the main body is cut.

The light source 2 includes a lamp 20 such as an extra-high pressure mercury lamp, and a reflector 21 for emitting forwards light (divergent light) diverging from the lamp. In the light source 2 of the embodiment, a plurality of (four) lamps 20 are provided with the reflectors 21, respectively, and the light source is received in lamp boxes 22 provided in the main body 1.

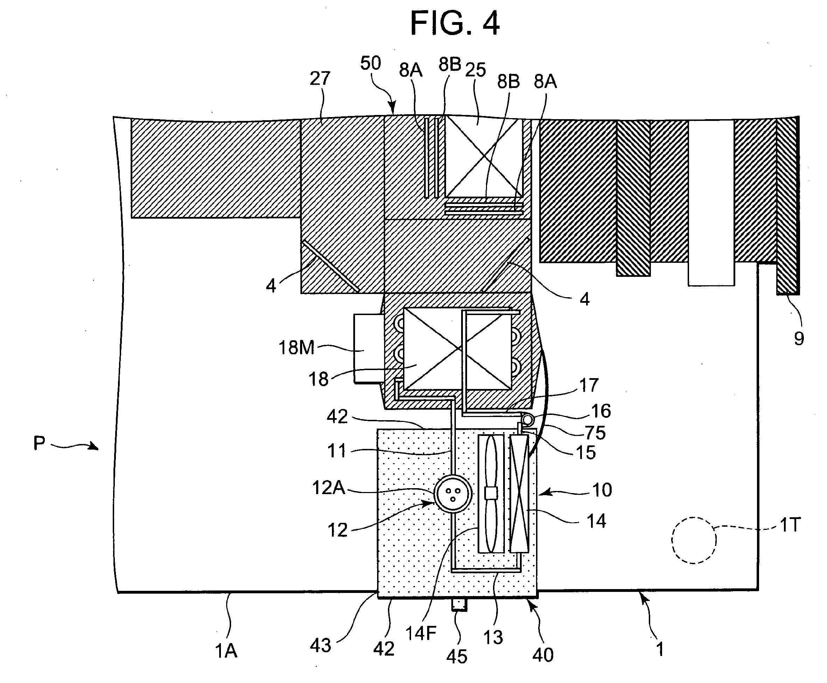

The uniform illumination optical system converts the light emitted from the light source 2 into a parallel luminous flux having a uniform luminance distribution, and includes an integrator lens, a condenser lens and the like. Moreover, the color separation optical system separates the parallel luminous flux from the uniform illumination optical system into light of colors R, G and B, and includes a dichroic mirror (not shown) and a mirror 4 for reflection (not shown in FIG. 1, and shown in FIG. 4 as described later) which separates the parallel luminous flux from the uniform illumination optical system into the respective colors and the like.

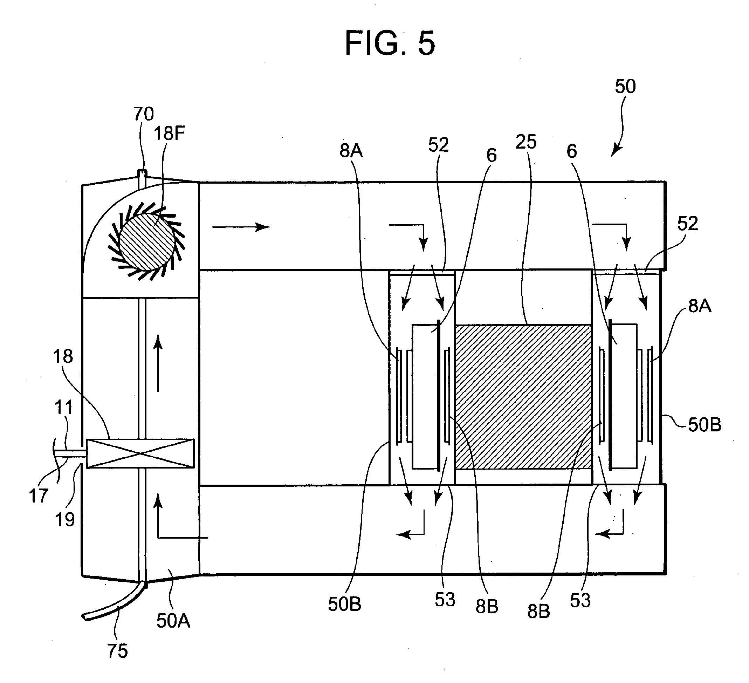

As shown in FIG. 4 or 5, the optical element 5 includes three liquid crystal display panels (LCD panels) 6, incident-side sheet polarizers 8A each disposed with a space from each liquid crystal panel 6 on an incidence side of the panel, outgoing-side sheet polarizers 8B (shown in FIGS. 4 and 5 as described later) each disposed with a space from each liquid crystal panel 6 on an emission side, a cross dichroic prism 25 and the like. The liquid crystal display panels 6 process (modulate) light separated by the color separation optical system and guided to the liquid crystal display panels 6 in accordance with image information. The cross dichroic prism 25 synthesizes each color light to form a projected light image. This cross dichroic prism 25 includes a reflective surface including X-like dielectric multilayer films, and the light from each liquid crystal panel 6 is formed into a single luminous flux via the reflective surface. It is to be noted that the projection lens 9 enlarges and projects the projected light image from the cross dichroic prism 25 onto the screen, and is detachably attached to a hole (not shown) formed in a wall surface of the main body 1. Further in FIG. 1, reference numeral 27 is a box member which covers an optical path for guiding the light emitted from the light source 2 to the liquid crystal display panels 6, the incident-side sheet polarizers 8A, 8B and the like, 1T is a leg portion provided on a bottom part of the main body 1, and 18M is a motor of a fan 18F described later. That is, a path (an optical path) through which the light passes from the light source 2 to the incident-side sheet polarizers 8A on the incidence side of the liquid crystal display panels 6 is formed in the box member 27.

An operation of the above constitution will be described. The light emitted from the light source 2 is converted into the parallel luminous fluxes having a uniform luminance distribution via the uniform illumination optical system, separated into the light of the colors R, G and B in the color separation optical system, and guided into the liquid crystal display panels 6 which function as corresponding light bulbs via the incidence-side incident-side sheet polarizers 8A. The luminous fluxes guided into the liquid crystal display panels 6 are modulated in accordance with the image information in the panels, converted into a projected image of the single luminous flux by the cross dichroic prism 25 through the emission-side outgoing-side sheet polarizers 8B, and enlarged and projected on the screen by the projection lens 9.

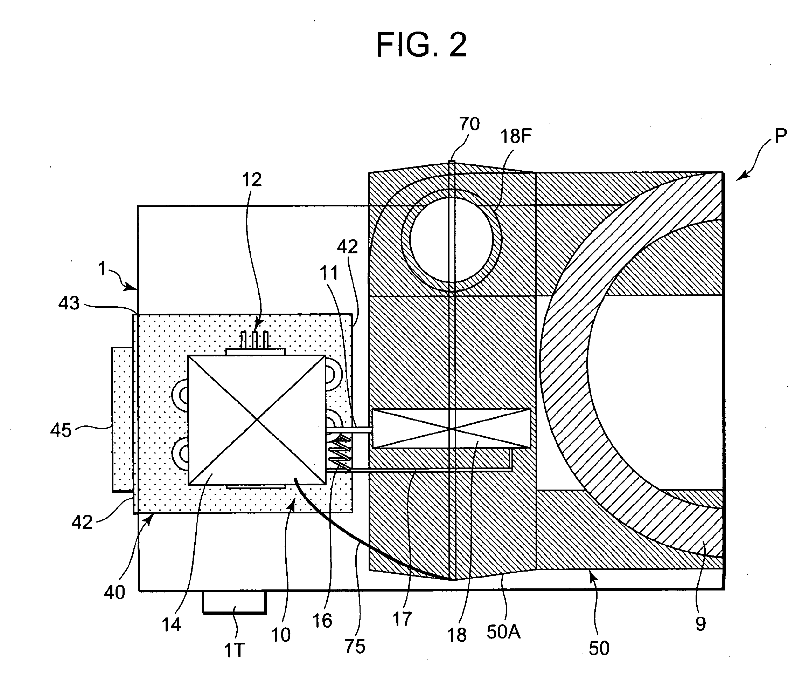

Next, a freezing unit 10 of the present invention will be described with reference to FIGS. 2 to 4. FIGS. 2 to 4 are diagrams showing arrangements of the freezing unit 10 of the present invention as viewed from a front surface (a projection lens 9 side), a side surface and a plane. The liquid crystal display projector P of the present invention includes the freezing unit 10 in the main body 1. This freezing unit 10 cools the optical element 5 including the liquid crystal display panels 6, the incident-side sheet polarizers 8A, 8B, the cross dichroic cross dichroic prism 25 and the like, and is constituted of a compressor 12, a radiator 14, a capillary tube 16 (a pressure reducing unit of the present invention) and an evaporator 18 as shown in FIGS. 2 to 4. That is, a refrigerant discharge tube 13 of the compressor 12 is connected to an inlet of the radiator 14, and an outlet of the radiator 14 is connected to a refrigerant pipe 15 extending to the capillary tube 16. An outlet of the capillary tube 16 is connected to an inlet of the evaporator 18 via a refrigerant pipe 17 (an inlet pipe of the evaporator 18), and an outlet of the evaporator 18 is connected to a refrigerant suction tube 11 (an outlet pipe of the evaporator 18) of the compressor 12 to constitute an annular refrigerant circuit.

The compressor 12 of the present embodiment is constituted by disposing, in a sealed container 12A having a vertically long cylindrical shape, a compression element and an electromotive element (a driving element) for driving this compression element. The radiator 14 for use in the embodiment is a heat exchanger of an air cooling type, and hence a fan 14F as blowing means is installed in the vicinity of (on the side of) the radiator 14. It is to be noted that in the present embodiment, the capillary tube 16 is used as a unit to reduce a pressure of the refrigerant, but the pressure reducing unit is not limited to the capillary tube, and any type of unit, for example, an expansion valve may be used as long as the pressure of the refrigerant can be reduced to a predetermined pressure.

The freezing unit 10 is constituted so that a basic posture thereof can be maintained in accordance with a posture change of the main body 1 of the liquid crystal display projector P by posture adjustment means. In the present embodiment, the basic posture is such a posture of the freezing unit 10 that oil can smoothly be supplied to a frictional portion (a sliding portion) of the compressor 12 (a lubricating characteristic is satisfactory) and that reliability of flow of the refrigerant in the refrigerant circuit is satisfactory. The posture adjustment means of the present embodiment is constituted of a basket-like rotator 40, and the freezing unit 10 is installed rotatably around a rotary shaft B disposed in parallel with a burner axis A (an optical axis) of the light source 2 on the same plane. Specifically, in this rotator 40, the compressor 12, the radiator 14 and the fan 14F of the radiator 14 are received, and the evaporator 18 is disposed in a duct 50 described later. The capillary tube 16 is disposed in a space between the rotator 40 and the duct 50.

An outer side surface of the rotator 40 is a disc-like panel 42, and this panel is rotatably disposed in a circular hole 43 formed in a side wall 1A of the main body 1 of the liquid crystal display projector P. That is, the rotator 40 of the present embodiment is rotatably supported on the side wall 1A of the main body 1 by the hole 43 of the main body 1. The panel surface 42 exposed to the outer surface of the main body 1 is provided with a dial 45 for adjusting a position of the rotator 40. That is, the rotator 40 of the present embodiment is constituted so that the dial 45 can be operated to adjust the posture of the rotator 40. It is to be noted that in the present, embodiment, the dial 45 is operated to adjust the posture of the rotator 40, and the basic posture of the freezing unit 10 is maintained. However, for example, the posture of the rotator 40 may automatically be adjusted in accordance with a gravity and a gravity center position, or the posture of the freezing unit 10 may automatically be adjusted with a posture sensor, an encoder or the like.

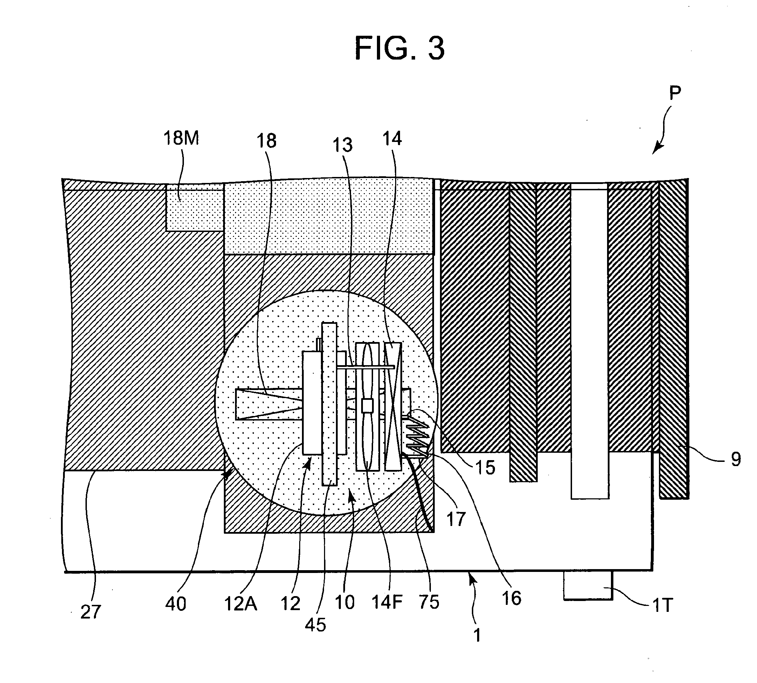

Then, in the rotator 40, the compressor 12, the radiator 14 and the fan 14F are arranged around the rotary shaft B of the rotator 40. Specifically, the compressor 12, the fan 14F and the radiator 14 are arranged in order of the compressor 12, the fan 14F and the radiator 14 in a diametric direction of the rotator 40 crossing an axial center direction of the rotary shaft B at right angles, and they are arranged in parallel on the same plane. That is, as shown in FIG. 3, the compressor 12 is disposed along one side surface of the fan 14F, and the radiator 14 is disposed along the other side surface of the fan 14F. In particular, according to the present embodiment, in a position corresponding to the rotation center of the rotator 40, the compressor 12 is disposed in the rotator 40 with the basic posture in a position where a vertically long cylindrical axis (a vertical axis) of the compressor 12 crosses the rotary shaft B of the rotator 40 at right angles.

Moreover, the capillary tube 16 and the evaporator 18 are similarly arranged around the rotary shaft B of the rotator 40. In the present embodiment, the capillary tube 16 and the evaporator 18 are positioned linearly with the units (the rotator 40, the fan 14F and the radiator 14) arranged in the diametric direction crossing the axial center direction at right angles in the rotator 40.

The compressor 12, the radiator 14 and the evaporator 18 are arranged around the rotary shaft B in this manner, whereby the freezing unit 10 can smoothly be rotated by the rotator 40. Especially, the units constituting the freezing unit 10 (the compressor 12, the radiator 14, the fan 14F, the capillary tube 16 and the evaporator 18) are linearly arranged, and a diameter of the freezing unit 10 rotated by the rotator 40 is set to be smaller than that of the rotator 40, whereby the freezing unit 10 can be received in a diametric region of the rotator 40. Therefore, a rotation radius of the freezing unit 10 can be reduced, smoother rotation can be achieved owing to the rotator 40, and excessive enlargement of the rotator 40 can be prevented.

On the other hand, the duct 50 is disposed around the optical element 5 including the liquid crystal display panels 6, the incident-side sheet polarizers 8A, 8B, the cross dichroic cross dichroic prism 25 and the like, and cold air subjected to the heat exchange between the air and the evaporator 18 is supplied to the optical element 5 including the liquid crystal display panels 6, the incident-side sheet polarizers 8A, 8B, the cross dichroic prism 25 and the like via the duct 50. That is, in the liquid crystal display projector P of the present embodiment, the optical element 5 is disposed in a cooling air path constituted of the duct 50 having a semi-sealed structure, and the optical element is locally cooled by the cold air circulated through the duct 50.

This duct 50 is constituted of an insulating material. Examples of the usable insulating material include rubber/plastic materials such as hard chloride vinyl, a silicon resin, a fluorine resin, a phenol resin, a polycarbonate resin and a polystyrene resin having a thermal conductivity of about 0.1 W/(m•K) to 0.3 W/(m•K), glass materials such as quartz glass and glass ceramic having a thermal conductivity of about 1 W/(m•K) to 4 W/(m•K), fiber insulating materials such as glass wool, rock wool and carbide cork having a thermal conductivity of about 0.0045 W/(m•K) or less, foam styrol, and insulating materials for construction and vacuum insulating materials constituted of these materials. In addition, as the insulating material, a material having a thermal conductivity of 1 W/(m•K) or less may be used.

Moreover, as described above, the evaporator 18 of the freezing unit 10 is incorporated in the duct 50, and the cold air subjected to the heat exchange between the air and the evaporator 18 can be circulated and supplied to the optical element. As shown in FIG. 5, the duct 50 is formed around the liquid crystal display panels 6 and the cross dichroic prism 25, and is constituted of a sealed path 50A having a substantially U-shape, and communication tubes 50B which connect blowout ports 52 formed in one end of the sealed path 50A positioned above the liquid crystal display panels 6 and suction ports 53 formed in the other end of the sealed path 50A positioned under the liquid crystal display panels 6. In the sealed path 50A, the evaporator 18 and the fan 18F are arranged.

Furthermore, in the communication tubes 50B, the liquid crystal display panels 6 (one of the three liquid crystal display panels 6 is installed in one communication tube 50B) and the incident-side sheet polarizers 8A, 8B are installed. Each liquid crystal panel 6 and the incident-side sheet polarizers 8A, 8B are arranged with a space therebetween in the communication tube 50B. The polarization plate 8A is disposed with a space from one wall surface of the communication tube 50B, and the polarization plate 8B is similarly disposed with a space from the other wall surface of the communication tube 50B. Furthermore, the communication tubes 50B are constituted so that the liquid crystal display panels 6, the incident-side sheet polarizers 8A, 8B, light to be radiated, and the image information modulated by the liquid crystal display panels 6 and then sent to the cross dichroic prism 25 are not disturbed and that the cold air subjected to the heat exchange between the air and the evaporator 18 are supplied to the liquid crystal display panels 6, the incident-side sheet polarizers 8A, 8B and the cross dichroic prism 25.

The evaporator 18 incorporated in this duct 50 is connected to the refrigerant pipe 17 from the capillary tube 16 on an inlet side, and connected to the refrigerant suction tube 11 of the compressor 12 on an outlet side. IN the present embodiment, the evaporator 18 is disposed rotatably by the rotator 40 in the duct 50. That is, a hole 19 extending through the duct 50 is formed in a side wall of the sealed path 50A of the duct 50 corresponding to the rotary shaft B of the rotator 40, and the refrigerant pipe 17 and the refrigerant suction tube 11 are arranged apart from each other along the rotary shaft B of the rotator 40 in an insulating manner.

Thus, the refrigerant pipe 17 connected to the inlet side of the evaporator 18 and the refrigerant suction tube 11 connected to the outlet side of the evaporator 18 are arranged along the rotary shaft B of the rotator 40, whereby the evaporator 18 can be disposed rotatably by the rotator 40 in the duct 50. Furthermore, the refrigerant pipe 17 and the refrigerant suction tube 11 are arranged apart from each other in the insulating manner, whereby it is possible to prevent a disadvantage that the refrigerant flowing through the refrigerant pipe 17 extending from the capillary tube 16 to the evaporator 18 and the refrigerant flowing through the refrigerant suction tube 11 extending from the evaporator 18 to the compressor 12 perform heat exchange therebetween. That is, the refrigerant having the pressure thereof reduced by the capillary tube 16 absorbs heat from the refrigerant flowing through the refrigerant suction tube 11 to evaporate, whereby it is possible to eliminate a disadvantage that a heat absorbing function in the evaporator 18 lowers and that the air circulated through the evaporator 18 is not easily cooled.

A cooling operation of the liquid crystal display panels 6 having the above constitution according to the present embodiment will be described. When the compressor 12 in the rotator 40 is driven, a low-temperature low-pressure refrigerant is sucked from the refrigerant suction tube 11 into a compression element (not shown), and compressed in the element. The compressed high-temperature high-pressure refrigerant is discharged to the refrigerant discharge tube 13, and flows into the radiator 14. The refrigerant which has flowed into the radiator 14 performs heat exchange between the refrigerant and the air blown by the fan 14F in the radiator to radiate heat. The refrigerant which has radiated the heat in the radiator 14 enters the capillary tube 16 disposed between the rotator 40 and the duct 50 through the refrigerant pipe 15. While the refrigerant passes through the capillary tube 16, the pressure thereof is reduced. In this state, the refrigerant flows into the evaporator 18 in the duct 50 through the refrigerant pipe 17. It is to be noted that the refrigerant pipe 17 is disposed apart from the refrigerant suction tube 11 connected to the outlet side of the evaporator 18 in the insulating manner as described above, so that the refrigerant flowing through the refrigerant pipe 17 as described above is not influenced by the refrigerant flowing through the refrigerant suction tube 11, that is, the refrigerant does not absorb any heat from the refrigerant flowing through the refrigerant suction tube 11, does not evaporate, and flows into the evaporator 18.

The refrigerant which has flowed into the evaporator 18 takes the heat from the air circulated through the duct 50 to evaporate in the evaporator. Then, the refrigerant which has received the heat (i.e., the heat of the optical element 5) of the air circulated through the duct 50 flows into the refrigerant suction tube 11, flows from the duct 50 via the hole 19, is sucked into the reflector 21 disposed in the rotator 40, is compressed, flows into the radiator 14, and releases the heat to the air blown in the radiator 14. Thus, the refrigerant repeats this cycle.

On the other hand, the air cooled by taking the heat from the air by the refrigerant in the evaporator 18 is discharged into the communication tube 50B from the blowout ports 52 formed right above the liquid crystal display panels 6 and the incident-side sheet polarizers 8A, 8B by the fan 18F installed in the sealed path 50A of the duct 50, and supplied to the liquid crystal display panels 6, the incident-side sheet polarizers 8A, 8B and the cross dichroic prism 25. That is, the air which has flows into the communication tube 50B from the blowout ports 52 passes through gaps formed between the liquid crystal display panels 6 and the incident-side sheet polarizers 8A provided in the communication tubes 50B, between the liquid crystal display panels 6 and the outgoing-side sheet polarizers 8B, between the polarization plate 8A and one wall surface of the communication tube 50B (i.e., a hole connected to an opening of the box member 27) and between the polarization plate 8B and the other wall surface of the communication tube 50B (i.e., the cross dichroic prism 25). In consequence, the liquid crystal display panels 6, the incident-side sheet polarizers 8A, 8B and the cross dichroic prism 25 release the heat to the air (cold air), and are cooled.

Then, the air heated by receiving the heat from the liquid crystal display panels 6, the incident-side sheet polarizers 8A, 8B and the cross dichroic prism 25 is sucked into the sealed path 50A from the suction ports 53 formed right under the liquid crystal display panels 6 and the incident-side sheet polarizers 8A, 8B to reach the evaporator 18. In the evaporator, the air is cooled by the heat exchange performed between the air and the refrigerant flowing through the evaporator 18, and is supplied to the liquid crystal display panels 6, the incident-side sheet polarizers 8A, 8B and the cross dichroic prism 25 from the blowout ports 52 via the fan 18F again, thereby repeating the cycle.

Thus, the duct 50 for supplying the cold air subjected to the heat exchange between the air and the evaporator 18 of the freezing unit 10 to the liquid crystal display panels 6, the incident-side sheet polarizers 8A, 8B and the cross dichroic prism 25 is formed around the liquid crystal display panels 6, the incident-side sheet polarizers 8A, 8B and the cross dichroic prism 25, whereby the air subjected to the heat exchange between the air and the evaporator 18 of the freezing unit 10 can be supplied to the liquid crystal display panels 6, the incident-side sheet polarizers 8A, 8B, the cross dichroic prism 25 and the like and can be cooled by the fan 18F. In consequence, the liquid crystal display panels 6, the incident-side sheet polarizers 8A, 8B, the cross dichroic prism 25 and the like can be cooled without being influenced by an outside air temperature, and the optical element 5 including the liquid crystal display panels 6, the incident-side sheet polarizers 8A., 8B, the cross dichroic prism 25 and the like can constantly be maintained at an optimum constant temperature.

In particular, the cold air subjected to the heat exchange between the air and the evaporator 18 can constantly be supplied to the liquid crystal display panels 6, the incident-side sheet polarizers 8A, 8B and the cross dichroic prism 25 as described above, so that an amount of the heat to be released is remarkably increased as compared with a case where outside air is supplied to the liquid crystal display projectors as in a conventional example. Therefore, the fan is miniaturized to reduce an installation space, and an amount of the air to be blown by the fan can be reduced to reduce noise. Furthermore, as compared with conventional electronic cooling, an energy efficiency can remarkably be improved.

Furthermore, the air heated by the heat generated by the liquid crystal display panels 6 and the refrigerant flowing through the evaporator 18 of the freezing unit 10 perform heat exchange therebetween, whereby the heat of the liquid crystal display panels 6 can be conveyed by the refrigerant, and released to the outside air blown in the radiator 14. Therefore, unlike a case where the optical element is cooled by the electronic cooling, a degree of freedom in spatial layout design (in the main body 1) improves.

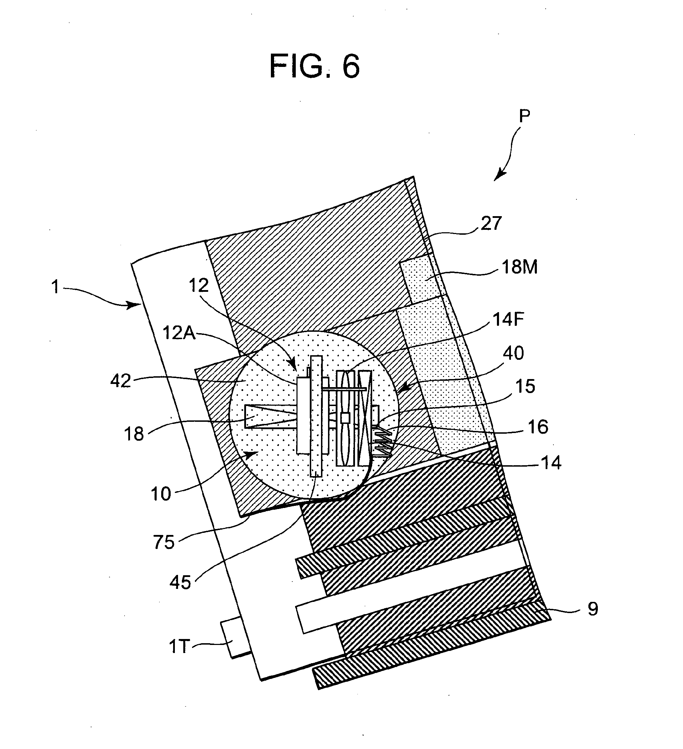

On the other hand, in a case where the liquid crystal display projector P is rotated around the burner axis A of the light source 2 as described above, the dial 45 attached to the panel 42 on the side of the outer surface of the rotator 40 is operated, whereby the freezing unit 10 can maintain its basic posture as shown in FIG. 6.

Thus, when the main body 1 rotates, the dial 45 is operated to adjust the posture of the freezing unit 10. In consequence, even when the main body 1 rotates to any posture, for example, even when the main body 1 is vertically (head and tail) reversed around the burner axis A of the light source 2, the basic posture of the freezing unit 10 can be maintained, so that the freezing unit 10 can be operated without any trouble. In consequence, without constituting any special oil supply mechanism in the compressor 12, the oil can smoothly be supplied to a frictional part, so that enlargement of the compressor 12 and steep rise of manufacturing cost can be minimized.

In addition, as described above, the air circulated through the duct 50 performs heat exchange between the air and the refrigerant, and is cooled in the evaporator 18, whereby a water content in the air is condensed on the surface of the evaporator 18, and then drops down as water droplets. In a case where the evaporator 18 is installed in the duct 50 having a semi-sealed structure as in the present embodiment, about several grams of water content is collected from the circulated air at a time when the liquid crystal display projector P is used once.

With regard to drainage (condensed water) from this evaporator 18, in a case where the freezing unit is installed in a stationary apparatus, that is, an apparatus which does not rotate or tilt as in a conventional freezing unit, a tray for receiving the drainage is installed in a lower part of the evaporator, and a pipe for discharging the drainage which has dropped down to the tray is attached to a bottom part of the tray, whereby the drainage from the evaporator is received in the tray. Afterward, the drainage can be discharged from the pipe connected to the bottom part of the tray. However, in a case where the freezing unit is mounted on an apparatus such as the liquid crystal display projector P in which the posture of the main body 1 changes (rotates), a place corresponding to the lower part of the evaporator 18 differs for each posture of the main body 1, so that even when the tray is disposed as in the conventional example, it is difficult to receive and discharge the drainage from the evaporator 18.

In this case, the drainage from the evaporator 18 scatters in the duct 50. In the worst case, together with the circulated air, the drainage flows into the communication tubes 50B from the blowout ports 52, or flows into the communication tubes 50B from the discharge ports 53 to invade the optical elements 5 provided in the tubes including the liquid crystal display panels 6, the incident-side sheet polarizers 8A, 8B and the like, whereby the optical element 5 might be damaged, and the processing of the light emitted from the light source might be disturbed.

To solve the problem, in the liquid crystal display projector P of the present invention, a liquid receiving portion is constituted in the whole region under the evaporator 18 in the prospective posture change of the main body 1. This liquid receiving portion is constituted in the inner surface of the duct 50. As shown in FIG. 1, the liquid receiving portion of the present embodiment is constituted of a tapered shape having the center thereof outside and a grove 70 formed in the center of the shape in the whole inner surface of the sealed path 50A of the duct 50 which surrounds the evaporator 18, so that the drainage from the evaporator 18 can be collected in the grove 70.

Furthermore, the projector is provided with a discharge member which discharges the drainage received in the grove 70 by use of a capillary force or a permeation force. As the discharge member made of a metal, for example, a wick is used. Typical examples of the member include a groove along an inner diameter of a metal pipe, a sintered metal, a metal mesh, and a plurality of fine wires. As a fibrous material, for example, sponge, thread or the like may be used in the present embodiment, the discharge member is constituted of a wick 75, and one end of this wick 75 opens in the grove 70 provided in the duct 50. Then, this wick 75 extends externally from the duct 50 via one open end of the wick in the grove 70 to enter the rotator 40. The other end of the wick abuts on the radiator 14 to open, or opens in the vicinity of the radiator 14. In the present embodiment, the one end of the wick 75 is attached to one end of the main body 1 on the side of a bottom surface. The wick 75 has a sufficient length or is constituted of a flexible material so that a connected state can be maintained even in a case where the rotator 40 rotates.

In such a constitution, in a case where the liquid crystal display projector P is rotated around the burner axis A of the light source 2 as described above, the drainage which has dropped down from the evaporator 18 drops down to the inner surface of the sealed path 50A of the duct 50 disposed on the downside owing to the posture of the main body 1, and the drainage is received in the grove 70 formed in the center owing to the tapered shape of the sealed path 50A. Then, the drainage in the grove 70 enters the wick 75 from one end which opens in the grove 70, and is discharged from the duct 50 to the radiator 14 owing to the capillary force of the wick.

Moreover, the drainage discharged to the radiator 14 is heated by the radiant heat of the refrigerant flowing through the radiator 14 to evaporate. Thus, the opening of the other end of the wick 75 is disposed so as to abut on the radiator 14, or is disposed in the vicinity of the radiator 14, whereby the drainage from the evaporator 18 can be evaporated by the radiant heat of the refrigerant flowing through the radiator 14. It is to be noted that in the present embodiment, it has been described that the other end of the wick 75 abuts on the radiator 14 to open, or opens in the vicinity of the radiator 14. In a case where the other end of the wick 75 abuts on the radiator 14 to open as in the former case, the drainage from the other end of the wick 75 can permeate the surface of the radiator 14 from an abutment portion. In consequence, the drainage received in the grove 70 can smoothly be discharged to the radiator 14, and evaporation can be promoted.

As described above in detail, according to the present invention, the drainage from the evaporator 18 can securely be discharged from the duct 50 regardless of the posture change of the main body 1, so that a disadvantage that the drainage flows through the optical element 5 can be avoided in advance. In consequence, reliability of the liquid crystal display projector P can be improved.

It is to be noted that in the present embodiment, the whole periphery of the sealed path 50A of the duct 50 which surrounds the evaporator 18 has the tapered shape including the center thereof outside, and the grove 70 is formed in the center. However, the present invention is not limited to this grove 70. The present invention is effective as long as the liquid receiving portion is constituted in the whole region under the evaporator 18 in the prospective posture change of the main body. For example, instead of the grove 70, the wick may be attached under the evaporator 18 in the prospective posture change of the main body. In this case, the drainage which has flowed inwards from one end is guided to the discharge member by use of the capillary force of the wick, whereby a similar water discharge effect can be obtained. Moreover, the discharge member is not limited to the wick 75 of the present embodiment, and the member may be constituted of, for example, a water absorbing fiber. In this case, the drainage received in the liquid receiving portion (the grove 70 in the embodiment) constituted of the moisture absorbing fiber can be discharged from the duct 50 by use of the permeation force.

Moreover, in the present embodiment, as one embodiment of the apparatus including the freezing unit 10, the liquid crystal display projector P has been described, but the projector is not limited to this example. There is not any special restriction as long as a main body of the projector is constituted of a light source, an optical element for processing the light from the light source in accordance with image information, and a projection lens for projecting the processed image of the projected light onto a screen. For example, the present invention is effectively applied to, for example, DLP projector (DLP (registered trademark)). Furthermore, in a first aspect of the invention, the apparatus including the freezing unit 10 is not limited to the projector, and the invention may be applied to an apparatus such as a conveyable refrigerator or freezer, a car air conditioner or a personal computer.

## Claims

1. An apparatus including a freezing unit in which a main body is provided with the freezing unit having a refrigerant circuit constituted of at least a compressor, a radiator, a pressure reducing unit and an evaporator, the apparatus comprising:
a liquid receiving portion constituted in the whole region under the evaporator in a prospective posture change of the main body; and
a discharge member which discharges drainage received in the liquid receiving portion by use of a capillary force or a permeation force.

2. The apparatus including the freezing unit according to claim 1, wherein the discharge member discharges, to the radiator, the drainage received in the liquid receiving portion.

3. A projector including a freezing unit, which is the apparatus according to claim 1 or 2, comprising a main body including a light source, an optical element which processes light emitted from the light source in accordance with image information, a projection lens which projects a projected image of the processed light onto a screen, and a duct in which an evaporator is incorporated and which supplies, to the optical element, air subjected to heat exchange between the air and the evaporator,
wherein the liquid receiving portion is constituted in an inner surface of the duct.
